# EUROPEAN PATENT SPECIFICATION

(11) **EP 3 833 070 B1**
(45) Date of publication and mention of the grant of the patent: **01.05.2024**
(21) Application number: 18929253.5
(22) Date of filing: 09.08.2018
(51) Int. Cl.: H04W 8/24, H04L 5/00, H04W 76/14, H04W 76/40

(54) **METHOD AND DEVICE FOR REPORTING CAPABILITY**
KAPAZITÄTSMELDEVERFAHREN UND -VORRICHTUNG
PROCÉDÉ ET DISPOSITIF DE RAPPORT DE CAPACITÉ

(43) Date of publication of application: 09.06.2021
(73) Proprietor: GUANGDONG OPPO MOBILE TELECOMMUNICATIONS CORP., LTD., Dongguan Guangdong 523860 (CN)
(72) Inventor: YANG, Ning, Dongguan, Guangdong 523860 (CN)
(74) Representative: Manitz Finsterwald Patent- und Rechtsanwaltspartnerschaft mbB
(86) International application number: PCT/CN2018/099688
(87) International publication number: WO 2020/029191

(56) References cited:
- WO-A1-2012/019550
- CN-A- 101 626 363
- CN-A- 102 469 611
- CN-A- 105 813 202
- CN-A- 107 484 251
- US-A1- 2013 114 447
- US-A1- 2018 084 539
- QUALCOMM INCORPORATED: "TP on reducing the size of UE capabilities reported", 3GPP DRAFT; R2-1701788 TP ON REDUCING THE SIZE OF UE CAPABILITIES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Athens, Greece; 20170213 - 20170217 12 February 2017 (2017-02-12), XP051212355, Retrieved from the Internet: URL:http://www.3gpp.org/ftp/Meetings_3GPP_ SYNC/RAN2/Docs/ [retrieved on 2017-02-12]
- QUALCOMM INCORPORATED: "On UE Capability #2 Processing Time,", 3 GPP TSG-RAN WG1 Meeting #93 R1-1807365, vol. RAN WG1, 20 May 2018 (2018-05-20), XP051442557,

## Description

### TECHNICAL FIELD

The present disclosure relates to the field of communication, and in particular to a method for reporting a capability, a terminal device, and a network device.

### BACKGROUND

When a terminal device enters a network, such as being in an attaching procedure or in a tracking-area-update (TAU) procedure, the terminal device may need to report capability information thereof to the network device if the network device does not store the capability information of the terminal device. The network device may store the capability information of the terminal device in an entity of a core network, such as a mobility management entity (MME), an authentication management function (AMF) entity, and so on. The core network may transmit the corresponding capability information to an access network in response to the terminal device accessing the network again to avoid reporting the capability information repeatedly by the terminal device.

However, it consumes a high signaling overhead to report the capability information of the terminal device. How to reduce the signaling overhead caused by reporting the capability information of the terminal device, has become a technical problem to be solved.

The Qualcomm Incorporated 3GPP Meeting #97 (R2-1701788) discloses that the UE reports its UE capability at least when the network requests, and the gNB can request what capabilities for the UE to report.

The US patent application No. US 2013/114447A1 discloses Incremental interference cancelation (IC) capability management and signaling. A mobile device selects certain groups of its individual IC capabilities to deactivate in response to various operating conditions it is experiencing. The mobile device reports its currently active IC capability to a serving base station, which uses information to determine whether to modify any existing communication conditions with respect to the reporting mobile device. The base station detects and analyzes the current communication conditions with respect to the reporting mobile device in light of the mobile device's currently active IC capabilities. The base station may modify such conditions through actions such as signaling the mobile device to activate or deactivate certain other groups of IC capabilities. The base station can make other modifications such as changing the communication schedule for the mobile device, modifying the control loop for channel quality indicator (CQI) reporting, and the like.

The US patent application No. US 2018/084539A1 discloses that LUE capability information is provided for coordination across multiple RATs or for single-RAT connectivity where UE capabilities may change or be reported according to capability groups. A base station may establish a first connection with a UE using a first RAT, and determine that the first connection is to be reconfigured, such as due to data transmission requirements exceeding the capacity of the currently configured connection. The base station may receive UE capability information, such as in response to a capability query transmitted to the UE. The base station may reconfigure the connection with the UE based on the UE capability response through initiating a second connection with a second base station using a second RAT, through reconfiguring the first connection, or combinations thereof.

### SUMMARY OF THE DISCLOSURE

The present invention is set out in the appended set of claims.

As the terminal device may report the identifier of each of the at least one capability group, which capabilities supported by the terminal device belong to, to the network device, without reporting information of the capabilities supported by the terminal device respectively, signaling overhead caused by reporting capability information of the terminal device may be reduced.

### BRIEF DESCRIPTION OF THE DRAWINGS

FIG. 1 is a schematic view of a wireless communication system according to embodiments of the present disclosure.
FIG. 2 is a flow chart of a terminal device reporting capability information.
FIG. 3 is a flow chart of a method of reporting capability information according to an embodiment of the present disclosure.
FIG. 4 is a schematic view of reporting additional capabilities according to an embodiment of the present disclosure.
FIG. 5 is a schematic view of a terminal device according to a claimed embodiment of the present disclosure.
FIG. 6 is a schematic view of a network device according to a claimed a embodiment of the present disclosure.
FIG. 7 is a structural schematic view of a communication device according to an embodiment of the present disclosure.
FIG. 8 is a structural schematic view of a chip according to an embodiment of the present disclosure.
FIG. 9 is a structural schematic view of a communication system according to an embodiment of the present disclosure.

### DETAILED DESCRIPTION

The technical solutions in the embodiments of the present disclosure are described in the following with reference to the accompanying drawings in the embodiments of the present disclosure.

The technical solutions of the embodiments of the present disclosure may be applied to various communication systems, such as the Global System of Mobile communication (GSM) system, the Code Division Multiple Access (CDMA) system, the Wideband Code Division Multiple Access (WCDMA) system, the General Packet Radio Service (GPRS), the Long Term Evolution (LTE) system, the LTE Frequency Division Duplex (FDD) system, the LTE Time Division Duplex (TDD) system, the Advanced LTE (LTE-A) system, the New Radio (NR) system, an evolution system of the NR system, the LTE-based access to unlicensed spectrum (LTE-U) system, the NR-based access to unlicensed spectrum (NR-U) system, the Universal Mobile Telecommunication System (UMTS), the Worldwide Interoperability for Microwave Access (WiMAX) communication system, the Wireless Local Area Networks (WLAN), the Wireless Fidelity (WiFi), the next generation communication system, other communication systems, and so on.

Generally, the conventional communication system only supports a limited number of accesses, and it is easy to be achieved. However, as the communication technology develops, the mobile communication system may not only support the conventional communication, but also support other types of communications, such as the Device to Device (D2D) communication, the Machine to Machine (M2M) communication, the Machine Type Communication (MTC), and the Vehicle to Vehicle (V2V) communication, and so on. The embodiments of the present disclosure also may be applied in these communication systems.

Alternatively, the communication system in the embodiments of the present disclosure may be applied in a scenario of Carrier Aggregation (CA), a scenario of Dual Connectivity (DC), or a standalone (SA) network distribution scenario.

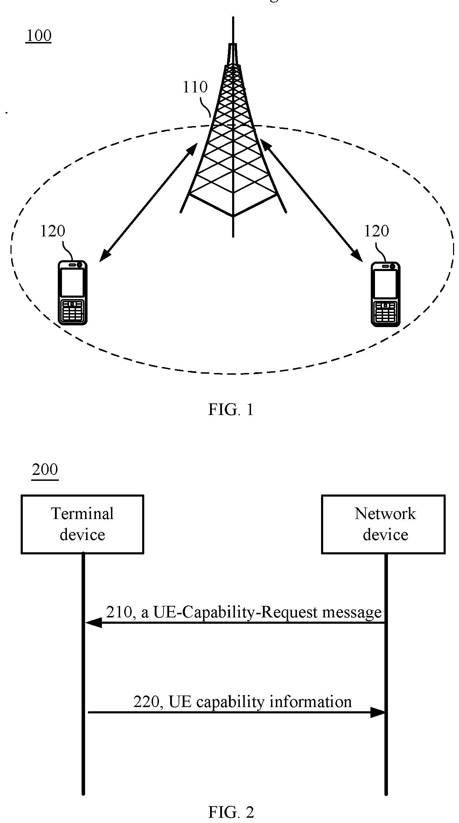

Illustratively, a communication system 100 applied in the embodiments of the present disclosure is shown in FIG. 1. The wireless communication system 100 may include a network device 110. The network device 110 may be a device communicating with a terminal device. The network device 110 may provide network coverage for a certain geographic area, and may communicate with terminal devices located within the certain geographic area under the network coverage. Alternatively, the network device 100 may be a base transceiver station (BTS) of the GSM system or the CDMA system, a NodeB (NB) of the WCDMA system, an evolutional Node B (eNodeB or eNB) of the LTE system, a network-side device of the NR system, or a wireless controller of the Cloud Radio Access Network (CRAN). Alternatively, the network device may be a relay station, an access point, a vehicle-mounted device, a wearable device, a network-side device of the next generation network, a network device of the future evolutional public land mobile network (PLMN), and so on.

The wireless network system 100 may further include at least one terminal device 120 located within an area covered by the network device 110. The "terminal device" used herein may include, but may not be limited to be, a device connected via a wireline, such as a public switched telephone network (PSTN), a digital subscriber line (DSL), a digital cable, a direct cable connection; and/or another data connection/network; and/or a device connected via a wireless interface, such as a cellular network, a wireless local area network (WLAN), a digital television network such as the DVB-H network, a satellite network, an AM-FM radio transmitter; and/or an apparatus of another terminal device configured to receive/send communication signals; and/or an Internet of Things (IoT) device. The terminal device configured to communicate via the wireless interface, may be referred as a "wireless communication terminal", a "wireless terminal", or a "mobile terminal".

The terminal device 120 may be mobile or fixed. Alternatively, the terminal device 120 may refer to an access terminal, a user equipment (UE), a subscriber unit, a subscriber station, a mobile workstation, a mobile station, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a personal digital assistant (PDA), a hand-held device having a capability of wireless communication, a computing device, or other devices connected to a wireless modem, a vehicle-mounted device, a wearable device, a terminal device used in the 5G network in the future, a terminal device used in a future evolutional PLMN, and so on. Alternatively, the terminal device 120 may perform the device to device (D2D) communication with another terminal device.

In detail, the network device 110 may provide services for a cell. The terminal device 120 may communicate with the network device 110 through a transmission resource (such as a frequency domain resource or a spectrum resource) used within the cell. The cell may be a cell corresponding to the network device 110 (such as a station). The cell may belong to a macro station or a station corresponding to a small cell. The small cell may include a metro cell, a micro cell, a pico cell, a femto cell, and so on. The small cell may have characteristics, such as, a small coverage area and a low transmission power, thus it may be adapted to provide a data transmission service with a high transmission speed.

FIG. 1 illustratively shows one network device and two terminal devices. Alternatively, the wireless communication system 100 may include a plurality of network devices, each of the network devices may have a coverage area where a plurality of terminal devices are located, the number of the network devices is different from the number of the terminal devices. The present disclosure is not limited in this. Alternatively, the wireless communication system 100 may further include other network entities, such as, a network controller, a mobile management entity, and so on, and the present disclosure is not limited in this.

When the terminal device accesses the network, such as being in the attaching procedure or in the TAU procedure, the terminal device may need to report capability information of the terminal device to the network in response to the network device not storing the capability information of the terminal device. For example, as shown in FIG. 2, which shows an exemplary flow chart of reporting capability information of the terminal device, the network device may send a UE-Capability-Request message to the terminal device, and the terminal device may report UE capability information thereof to the network device after the terminal device receives the UE-Capability-Request message. Then, the network may store the capability information of the terminal device in an entity of a core network, such as the MME, the AMF entity, and so on. The core network may transmit the corresponding capability information to an access network in response to the terminal device accessing the network again, such that the terminal device may not report the capability information repeatedly. However, the capability of the terminal device may involve capabilities of various software and hardware of the terminal device, and may be highly complicated, thus it will consume a high signaling overhead.

Therefore, in the embodiments of the present disclosure, various capabilities supported by terminal devices may be grouped, and a terminal device may report an identifier of each of at least one capability group, which capabilities supported by the terminal device belong to, to the network device, such that the network device may determine the capabilities supported by the terminal device based on the received identifier of the capability group. As the terminal device reports the identifier of the capability group, which the capabilities supported by the terminal device belong to, to the network device, without reporting information of the capabilities supported by the terminal device respectively, the signaling overhead caused by reporting the capability information of the terminal device may be reduced.

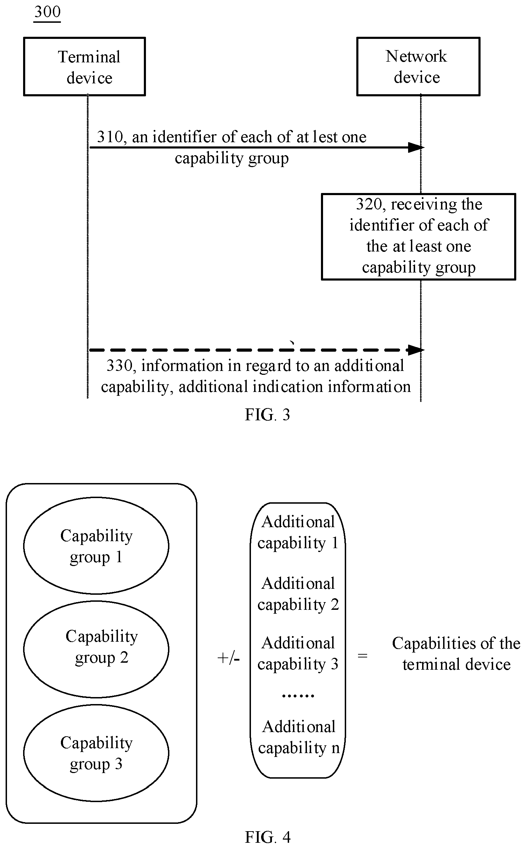

FIG. 3 is an interaction flow chart of a method 300 for reporting capability information according to an embodiment of the present disclosure. The method shown in FIG. 3 may be performed by a terminal device and a network device. The terminal device may be the terminal device 120 shown in FIG. 1, and the network device may the network device 110 shown in FIG. 1. As shown in FIG. 3, the method 300 for reporting the capability may include:

In an operation 310, according to the claimed invention, the terminal device reports an identifier of each of at least one capability group, which capabilities supported by the terminal device belongs to, to the network device.

In an operation 320, according to the claimed invention, the network device receives the identifier of each of the at least one capability group, which the capabilities supported by the terminal device belong to, reported from the terminal device.

In detail, various capabilities may be grouped into various capability groups, and each capability group may be labeled with a unique identifier, such as a name or an index of each capability group. The terminal device may determine which of the capability groups the capabilities supported by the mobile terminal belong to, and report identifiers of determined capability groups to the network device. In this way, the network device may determine the capabilities supported by the terminal device based on the received identifiers of the capability groups. A combination of capabilities in the capability groups, which are indicated by the identifiers, represents the capabilities supported by the terminal device.

Before the operation 310, the method may further include: the terminal device obtaining capability grouping information. The capability grouping information includes information of a plurality of capability groups and capabilities included in each of the capability groups.

Alternatively, the network device, according to the claimed invention, sends the capability grouping information to the terminal device, such that terminal device receives the capability grouping information sent from the network device. That is, the capability grouping information is configured by the network device. For example, the network device may send a Non-Access Stratum (NAS) signaling or an Access Stratum (AS) signaling, and the NAS signaling or the AS signaling may carry the capability grouping information, such that the terminal device may obtain the capability grouping information from the received NAS signaling or the received AS signaling sent from the network device.

Alternatively, the terminal device may obtain the capability grouping information, which is pre-stored in the terminal device. That is, the capability grouping information may be pre-set. For example, the capability grouping information may be predetermined under a protocol.

In the embodiments of the present disclosure, the plurality of capability groups may include capability groups, which are classified by radio capabilities (such as, capabilities related to the radio access). Alternatively, the plurality of capability groups also may include capability groups, which are classified by core networks (such as, capabilities related to the core networks). The embodiments of the present disclosure are not limit in this, and any capability of a terminal being reported, may be implemented by the method described in the embodiments of the present disclosure.

For example, the at least one capability group may include at least one of following capabilities: a carrier aggregation (CA) capability, an Evolved Multimedia Broadcast Multicast Service (eMBMS) capability, a frequency range (FR), a communication capability of Vehicle to Everything (V2X), and a beam transmission capability.

The CA capability may include a carrier aggregation capability of two component carriers (2CC CA), a carrier aggregation capability of three component carriers (3CC CA), a carrier aggregation capability of four component carriers (4CC CA), and so on. The Frequency Range (FR) may include an FR 1 (such as a frequency band below 6GHz), an FR 2 (such as a frequency band of millimeter waves), and so on. The beam transmission capability may include a support for 8-beam transmission, a support for 4-beam transmission, and so on.

Further, the at least one capability group also may include groups, which are classified by other UE radio capability information or other UE core network capability information, such as, supported antenna ports, supported radio access types (RAT), power levels, packet service handover (PSHO) capabilities, supported security algorithms, capabilities for whether supporting single radio voice call continuity (SRVCC), and so on.

For example, Table 1 shows capabilities included in each capability group and an identifier of each capability group. The terminal device may report an identifier 0 to the network device, for indicating that the terminal device has the 2CC CA capability. The terminal device may report an identifier 1 to the network device, for indicating that the terminal device has the 3CC CA capability. The terminal device may report an identifier 2 to the network device, for indicating that the terminal device has the 4CC CA capability. The terminal device may report an identifier 3 to the network device, for indicating that the terminal device has the eMBMS capability. The terminal device may report an identifier 4 to the network device, for indicating that the terminal device has the communication capability of V2X. The terminal device may report an identifier 5 to the network device, for indicating that the terminal device supports transmission within the FR 1. The terminal device may report an identifier 6 to the network device, for indicating that the terminal device supports transmission within the FR 2. The terminal device may report an identifier 7 to the network device, for indicating that the terminal device supports the 8-beam transmission in maximum. The terminal device may report an identifier 8 to the network device, for indicating that the terminal device supports the 4-beam transmission in maximum.

**Table 1**

| Capability Group | Identifier of the Capability Group |
|---|---|
| 2CC CA | Identifier 0 |
| 3CC CA | Identifier 1 |
| 4CC CA | Identifier 2 |
| EMBMS | Identifier 3 |
| V2X | Identifier 4 |
| FR1 | Identifier 5 |
| FR2 | Identifier 6 |
| 8-beam transmission | Identifier 7 |
| 4-beam transmission | Identifier 8 |
| ... | ... |

Practically, the capability group may further be sub-divided into sub-groups for classifying more detailed capabilities. For example, as shown in Table 2 and Table 3, the 2CC CA capability, the 3CC CA capability, and the communication capability of V2X will be taken as examples for illustration hereinafter.

As shown in Table 2, frequency bands (B) used in the 2CC CA capability may be sub-divided into B1+B7, B1+B5, B5+B7, and so on. Frequency bands used in the 3CC CA capability may be sub-divided into B1+B5+B7, B1+B5+B8, B5+B7+B8, and so on. The communication capability of V2X may be sub-divided into a communication capability based on Uu port and a communication capability based on sidelink (SL). Further, the communication capability based on Uu port may be further sub-divided into a semi-persistent scheduling (SPS) capability, a resource sensing capability, and so on.

As shown in Table 3, the frequency bands used in the 2CC CA capability may be sub-divided into B 1, B5, B7, and so on. The frequency bands used in the 3CC CA capability may be sub-divided into B1, B5, B7, B8, and so on. The communication capability of V2X may include the communication capability based on the Uu port and the communication capability based on the sidelink (SL). Further, the communication capability based on the Uu port may include a semi-persistent scheduling (SPS) capability, a resource sensing capability, and so on.

Which of the capabilities are supported by the terminal device, thus the terminal device reports identifier/identifiers of capability group/groups, which the supported capability/capabilities belong to, to the network device, such that the network device may determine the capability/capabilities of the terminal device based on the identifier/identifiers of the capability group/groups received from the terminal device.

For example, as shown in Table 2, the terminal device may report an identifier 100, and it means that the terminal device supports all possible combinations of various frequency bands used in the 2CC CA. That is, the terminal device may support all possible combinations of the various frequency bands, such as B1+B5, B1+B7, B5+B7, and so on. The terminal device may report an identifier 110, and it means that the terminal device supports B1+B5 only. The terminal device may report the identifier110 and an identifier 120, and it means that the terminal device supports B1+B5 and B1+B7. The terminal device may report an identifier 210, and it means that the terminal device supports B1+BS+B7.

In another example, as shown in Table 2, the terminal device may report an identifier 320, and it means that the terminal device supports the SL transmission of the V2X communication capability. The terminal device may report an identifier 321 and an identifier 322, and it means that the terminal device supports the semi-persistent scheduling (SPS) capability and the resource sensing capability of the SL transmission.

In still another example, as shown in Table 3, as long as the terminal device is able to support B1 in the 2CC CA, the terminal device may report the identifier110, for indicating that the terminal device supports all possible combinations including B1, such as B1+B5, B1+B7, and so on. As long as the terminal is able to support B5 in the 2CC CA, the terminal device may report the identifier120, for indicating that the terminal device supports all possible combinations including B5, such as B1+B5, B5+B7, and so on.

**Table 2**

| Capability Group (Identifiers of the capability groups which capabilities supported by the terminal device belong to) | | |
|---|---|---|
| 2CC CA (Identifier 100) | B1+B5 (Identifier 110) | |
| | B5+B7 (Identifier 120) | |
| | B5+B7 (Identifier 130) | |
| | ...... | |
| 3 CC CA (Identifier 200) | B1+B5+B7 (Identifier 210) | |
| | B1+B5+B8 (Identifier 220) | |
| | B5+B7+B8 (Identifier 230) | |
| | ...... | |
| V2X (Identifier 300) | Transmission based on the Uu port (Tag 310) | semi-persistent scheduling (Identifier 311) |
| | | Resource Sensing (Identifier 312) |
| | | ...... |
| | Sidelink transmission (Identifier 320) | semi-persistent scheduling (Identifier 321) |
| | | Resource Sensing (Identifier 322) |
| | | ...... |
| | ...... | |
| eMBMS (Identifier 400) | ...... | |
| ...... | | |

**Table 3**

| Capability Group (Identifiers of the capability groups which capabilities supported by the terminal device belong to) | | |
|---|---|---|
| 2CC CA (Identifier 100) | B1 (Identifier 110) | |
| | B5 (Identifier 120) | |
| | B7 (Identifier 130) | |
| | ...... | |
| 3 CC CA (Identifier 200) | B1 (Identifier 210) | |
| | B5 (Identifier 220) | |
| | B7 (Identifier 230) | |
| | B8 (Identifier 240) | |
| | ...... | |
| V2X (Identifier | Transmission based on | semi-persistent scheduling |
| 300) | the Uu port (Identifier 310) | (Identifier 311) |
| | | Resource Sensing (Identifier 312) |
| | | ...... |
| | Sidelink transmission (Identifier 320) | semi-persistent scheduling (Identifier 321) |
| | | Resource Sensing (Identifier 322) |
| | | ...... |
| | ...... | |
| eMBMS (Identifier 400) | ...... | |
| ...... | | |

The classifying manners as shown in Tables 1 to 3 only illustratively show how to classify the capability groups, and the embodiments of the present disclosure may employ other means to classify the capability groups, and the present disclosure is not limited in granularity of classifying the capability groups. Other means to classify the capability groups also should be within the scope of the present disclosure.

Alternatively, as shown in FIG. 3, the method may further include an operation 330.

In the operation 330, the terminal device may report information in regard to an additional capability and additional indication information, to the network device.

The additional indication information may be configured to indicate that the terminal device further includes or excludes the additional capability from the at least one capability group.

The additional capability may include at least one capability.

As shown in FIG. 4, after the terminal device reports identifiers of capability group 1, capability group 2 and capability group 3, the terminal device may further report additional capabilities 1 to n. The capabilities in the capability groups add or subtract the additional capabilities, to form the capabilities of the terminal device finally.

After the terminal device reports the identifier of the capability group, which the capabilities supported by the terminal device belong to, some capabilities supported by the terminal device may not be classified into any capability group properly. In this situation, the some capabilities may be reported individually, and the terminal device may directly report information in regard to the some capabilities, which should be added, to the network device.

For example, as shown in Table 3 in the above, if the terminal device supports the 3CC CA capability and the frequency band B1 in the 3CC CA, the terminal device may report the identifier 210 to the network device to indicate that the terminal device supports all possible combinations of frequency bands having the B1, such as B1+B5+B7, B1+B5+B8,and so on. However, if the terminal device further supports B5+B7+B8 alone, the terminal device may report an additional capability of B5+B7+B8 to the network device by the means shown as 220 in FIG. 2. Furthermore, the terminal device may notice the network device that the additional capability is a capability which should be added, such that the network device may determine that the capabilities of the terminal device include various capabilities included in the capability group indicated by the identifier 210 and the capability of BS+B7+B8.

Alternatively, after the terminal device reports the identifier of the capability group, which the capabilities supported by the terminal device belong to, the terminal device finds that some capabilities included in the reported capability group are not supported by the terminal device. In this situation, the terminal device may report to the network device individually that the some capabilities should be subtracted.

For example, as shown in Table 3 in the above, if the terminal device supports the 3CC CA capability and the frequency band B1 in the 3CC CA, the terminal device may report the identifier 210 to the network device to indicate that the terminal device is able to support all possible combinations of frequency bands having the B1, such as B1+B5+B7, B1+B5+B8, and so on. However, if the terminal further reports information in regard to an additional capability and additional indication information, and the additional indication information is configured to indicate that the terminal device does not support B5 or B7 or B8, thus the network device may determine that the capabilities supported by the terminal device include all capabilities included in the capability group indicated by the identifier210 except the capability of B5 or B7 or B8.

Alternatively, before the operation 310, the method may further include: sending a UE-Capability-Request message to the terminal device by the network device. The UE-Capability-Request message is configured to indicate the terminal device to report the identifier of each of the at least one capability group.

Correspondingly, before the operation of 310, the method may further include: receiving the UE-Capability-Request message sent from the network device by the terminal device. The UE-Capability-Request message is configured to indicate the terminal device to report the identifier of each of the at least one capability group.

That is, the terminal device may actively report the identifier/identifiers of the capability group/groups, which the capabilities supported by the terminal device belong to. Alternatively, the terminal device may report the identifier/identifiers of the capability group/groups in response to the UE-Capability-Request message sent from the network device when it is requested by the network device.

It should be noted that, various embodiments of the present disclosure and/or technical features in the various embodiments may be combined with arbitrary if not conflicting with each other, a technical solution obtained after the combination should be within the scope of the present disclosure.

It should be understood that, in the various embodiments of the present disclosure, reference numerals of various operations do not suggest a sequence for performing the various operations. The sequence for performing the various operations should be determined based on functions and inherent logic of the various operations, and should not limit the process of implementing the embodiments of the present disclosure.

The above description illustrates the communication method in the embodiments of the present disclosure in details. An apparatus in the embodiments of the present disclosure will be described hereinafter by referring to FIGS. 4 to 8. Technical features described in the embodiments about the method may be adapted to the following embodiments about the apparatus.

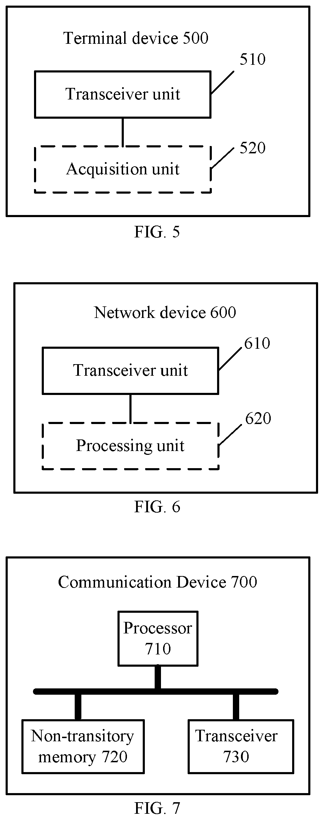

FIG. 5 is a schematic view of a terminal device in a claimed embodiment of the present disclosure.
As shown in FIG. 5, the terminal device 500 includes a transceiver unit 510. The transceiver unit 510 may be configured to report an identifier of each of at least one capability group, which capabilities supported by the terminal device belong to, to the network device.

Therefore, various capabilities supported by the terminal device may be grouped. The terminal device may report the identifier of the capability group, which capabilities supported by the terminal device belong to, to the network device, such that the network device may determine the capabilities supported by the terminal device based on the received identifier of the capability group. As the terminal device may not need to report each capability to the network device, signaling overhead caused by reporting the capability information of the terminal device may be reduced.

Alternatively, the terminal device, according to the claimed invention, further include an acquisition unit 520. The acquisition unit 520 may be configured to obtain capability grouping information. The capability grouping information includes information of a plurality of capability groups and capabilities included in each of the capability groups.

Alternatively, the acquisition unit 520 may specifically be configured to: receive the capability grouping information sent from the network device through the transceiver unit 510; or obtain the capability grouping information pre-stored in the terminal device.

Alternatively, the transceiver unit 510 may be configured to: receive the NAS signaling or the AS signaling sent from the network device. The NAS signaling and the AS signaling may carry the capability grouping information.

Alternatively, the transceiver unit 510 may further be configured to: report information in regard to an additional capability and additional indication information to the network device. The additional indication information may be configured to indicate that the terminal device further includes or excludes the additional capability from the at least one capability group. The additional capability may include at least one capability.

Alternatively, the transceiver unit 510 may further be configured to: receive the UE-Capability-Request message sent from the network device. The UE-Capability-Request message is configured to indicate the terminal device to report the identifier of each of the at least one capability group.

Alternatively, the at least one capability group may include at least one of following capabilities: a 2CC CA capability, a 3CC CA capability, a 4CC CA capability, an FR1, an FR 2, an eMBMS capability, a communication capability of V2X, and a beam transmission capability.

It should be understood that, the terminal device 500 may perform the operations of the above-mentioned method 300 performed by the terminal device. To provide a concise description, the method will not be repeatedly described hereinafter.

FIG. 6 is a schematic view of a network device according to a claimed embodiment of the present disclosure. As shown in FIG. 6, the network device 600 includes a transceiver unit 610. The transceiver unit 610 may be configured to: receive an identifier of each of at least one capability group sent from the terminal device, and the at least one capability group includes a capability supported by the terminal device.

Therefore, various capabilities supported by the terminal device may be grouped. The terminal device may report the identifier of the capability group, which capabilities supported by the terminal device belong to, to the network device, such that the network device may determine the capabilities supported by the terminal device based on the received identifier of the capability group. As the terminal device may not need to report each capability to the network device individually, signaling overhead caused by reporting the capability information of the terminal device may be reduced.

Alternatively, the network device, according to the claimed invention, further includes a processing unit 620. The processing unit 620 may be configured to: determine the capability supported by the terminal device based on the at least one capability group.

Alternatively, the transceiver unit 610 may further be configured to: send capability grouping information. The capability grouping information includes information of a plurality of capability groups and capabilities included in each of the capability groups.

Alternatively, the transceiver unit 610 may specifically be configured to: send a NAS signaling and an AS signaling to the terminal device. The NAS signaling and the AS signaling may carry the capability grouping information.

Alternatively, the transceiver unit 610 may further be configured to: receive information in regard to an additional capability and additional indication information reported from the terminal device. The additional indication information may be configured to indicate that the terminal device further includes or excludes the additional capability from the at least one capability group, and the additional capability may include at least one capability.

Alternatively, the transceiver unit 610 may further be configured to: send the UE-Capability-Request message to the terminal device. The UE-Capability-Request message is configured to indicate the terminal device to report the identifier of each of the at least one capability group.

Alternatively, the at least one capability group may include at least one of following capabilities: a 2CC CA capability, a 3CC CA capability, a 4CC CA capability, an FR1, an FR2, an eMBMS capability, a communication capability of V2X, and a beam transmission capability.

It should be understood that, the network device 600 may perform the operations of the above-mentioned method 300 performed by the network device. To provide a concise description, the method will not be repeatedly described hereinafter.

FIG. 7 is a structural schematic view of a communication device according to an embodiment of the present disclosure. As shown in FIG. 7, the communication device 700 may include a processor 710. The processer 710 may invoke a computer program from a non-transitory memory and run the computer program to perform the method described in the embodiments of the present disclosure.

Alternatively, as shown in FIG. 7, the communication device 700 may further include a non-transitory memory 720. The processor 710 may invoke a computer program from the non-transitory memory 720 and run the computer program to perform the method described in the embodiments of the present disclosure.

The non-transitory memory 720 may be a component independent from the processor 710 or integrated within the processor 710.

Alternatively, as shown in FIG. 7, the communication device 700 may further include a transceiver 730. The processor 710 may control the transceiver 730 to communicate with other devices. In detail, the processor 710 may control the transceiver 730 to send information or data to the other devices or receive information or data sent from the other devices.

The transceiver 730 may include a transmitter and a receiver. The transceiver 730 may further include one or more antennas.

Alternatively, the communication device 700 may be the terminal device described in the above embodiments of the present disclosure. The communication device 700 may perform operations of various methods in the embodiments of the present disclosure performed by the terminal device. To provide a concise description, the method will not be repeatedly described hereinafter.

Alternatively, the communication device 700 may be the network device described in the embodiments of the present disclosure. The communication device 700 may perform operations of various methods in the embodiments of the present disclosure performed by the network device. To provide a concise description, the method will not be repeatedly described hereinafter.

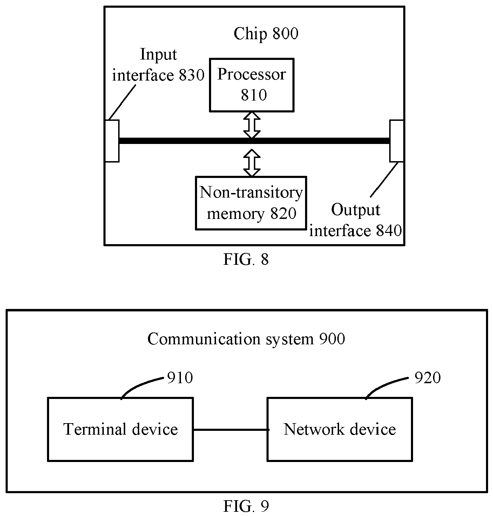

FIG. 8 is a structural schematic view of a chip according to an embodiment of the present disclosure. As shown in FIG. 8, a chip 800 may include a processor 810. The processor 810 may invoke a computer program from a non-transitory memory and run the computer program to perform the method described in the above embodiments of the present disclosure.

Alternatively, as shown in FIG. 8, the chip 800 may further include a non-transitory memory 820. The processor 810 may invoke a computer program from the non-transitory memory 820 and run the computer program to perform the method described in the above embodiments of the present disclosure.

The non-transitory memory 820 may be a component independent from the processor 810 or integrated with the processor 810.

Alternatively, the chip 800 may further include an input interface 830. The processor 810 may control the input interface 830 to communicate with other devices or chips. In detail, the processor 810 may control the input interface 830 to receive information or data sent from the other devices or chips.

Alternatively, the chip 800 may further include an output interface 840. The processor 810 may control the output interface 840 to communicate with other devices and chips. In detail, the processor 810 may control the output interface 840 to output information or data to the other devices or chips.

Alternatively, the chip may be configured in the terminal device of the embodiments of the present disclosure. The chip may perform operations of the methods, which are performed by the terminal device as described in the above embodiments of the present disclosure. To provide a concise description, the methods will not be repeatedly described hereinafter.

Alternatively, the chip may be configured in the network device of the embodiments of the present disclosure. The chip may perform operations of the methods, which are performed by the network device as described in the above embodiments of the present disclosure. To provide a concise description, the methods will not be repeatedly described hereinafter.

It should be understood that, the chip provided in the embodiments of the present disclosure may also be referred as a system-level chip, a system-chip, a chip system, or a system-on-chip.

It should be understood that, the processor in the embodiments of the present disclosure may be an integrated-circuit chip, able to process a signal. Practically, various operations of the above-mentioned method may be performed by an integrated logic circuit of hardware of the processor, or by an instruction in a form of software. The processor may be a general processor, a digital signal processor (DSP), an application specific integrated circuit (ASIC), a field programmable gate array (FPGA), or other programmable logic devices, a discrete gate or transistor logic component, a discrete hardware assembly. The processor may achieve or perform the method, the operations, and the logic diagrams shown in the embodiments of the present disclosure. The general processor may be a microprocessor or any general-purpose processor. The operations of the method in the embodiments of the present disclosure may be directly embodied as being executed and completed by a hardware decoding processor, or executed and completed by a combination of hardware and software modules in a decoding processor. The software module may be arranged in a mature storage medium in the related art, such as a random access memory, a flash memory, a read-only memory, a programmable read-only memory, an electrical erasable programmable memory, a register and so on. The storage medium may be arranged in the non-transitory memory. The processor may read information stored in the non-transitory memory and performs the operations of the above method in combination with its hardware.

It should be understood that, the non-transitory memory in the embodiments of the present disclosure may be a volatile memory, a non-volatile memory, or a non-transitory memory including both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM) serving as a cache. As an exemplary but not restrictive illustration, various forms of the RAM may be applied, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the memories in the systems and the methods described in the embodiments of the present disclosure include, but are not limited to, the above-mentioned memories and any other suitable types of memories.

FIG. 9 is a structural schematic view of a communication system according to an embodiment of the present disclosure. As shown in FIG. 9, the communication system 900 may include a terminal device 910 and a network device 920.

The terminal device 910 may be configured to report an identifier of each of at least one capability group, which capabilities supported by the terminal device belong to, to the network device.

The network device 920 may be configured to receive the identifier of each of the at least one capability group, which includes a capability supported by the terminal device, sent from the terminal device.

The terminal device 910 may be configured to achieve functions achieved by the terminal device performing the method 300. Components of the terminal device 910 may be shown as the terminal device 400 in FIG. 4, which will not be repeatedly described hereinafter.

The network device 920 may be configured to achieve functions achieved by the network device performing the method 300. Components of the network device 920 may be shown as the network device 500 in FIG. 5, which will not be repeatedly described hereinafter.

The present disclosure further provides a computer-readable storage medium, configured to store a computer program. Alternatively, the computer-readable storage medium may be applied in the network device in the embodiments of the present disclosure. The computer program enables the computer to execute the operations of the methods performed by the network device in various embodiments of the present disclosure, which will not be repeatedly described hereinafter. Alternatively, the computer-readable storage medium may be configured in the terminal device of the embodiments of the present disclosure. The computer program enables the computer to execute the operations of the methods performed by the terminal device in various embodiments of the present disclosure, which will not be repeatedly described hereinafter.

The embodiments of the present disclosure further provide a computer program product, including a computer program instruction. Alternatively, the computer program product may be configured in the network device of the embodiments of the present disclosure. The computer program product enables the computer to execute the operations of the methods performed by the network device in various embodiments of the present disclosure, which will not be repeatedly described hereinafter. Alternatively, the computer program product may be configured in the terminal device of the embodiments of the present disclosure. The computer program product enables the computer to execute the operations of the methods performed by the terminal device in various embodiments of the present disclosure, which will not be repeatedly described hereinafter.

The embodiments of the present disclosure further provide a computer program. Alternatively, the computer program may be configured in the network device. When the computer program is running on the computer, the computer may execute the operations of the methods performed by the network device in various embodiments of the present disclosure, which will not be repeatedly described hereinafter. Alternatively, the computer program may be configured in the terminal device. When the computer program is running on the computer, the computer may execute the operations of the methods performed by the terminal device in various embodiments of the present disclosure, which will not be repeatedly described hereinafter.

It should be understood that, terms of "system" and "network" used in the present description may be interchangeable. In the present description, the term of "and/or" describes a relationship between correlated objects only, and indicates that there may be three relationships between the correlated objects. For example, A and/or B may indicate three situations, only A exists, A and B exist at the same time, and only B exists. Further, in the present description, the character "/" indicates that a relationship between objects in front of and after the character "/" is "or".

It should be understood that, in the embodiments of the present disclosure, an expression of "B corresponding to A" indicates that B corresponds to A, and B may be determined based on A. However, it should be understood that, determining B based on A does not only indicate determining B based on A, but also indicates determining B based on A and/or other information.

An ordinary skilled person in the art may realize that the units and algorithm operations described in various embodiments of the present disclosure may be achieved by electronic hardware, or achieved by a combination of the electronic hardware and software of the computer. Specific applications and constraint conditions of a configuration may determine the functions to be achieved by software or hardware. The skilled person may apply different solutions to achieve the described functions based on each specific application. These achievements should not be considered to be out of the scope of the present disclosure.

An ordinary skilled person in the art may understand that, to provide a concise description, an operation process of the above-mentioned system, apparatus, and units may refer to corresponding processes described in the previous method embodiments, which will not be repeatedly described hereinafter.

In various embodiments of the present disclosure, it should be understood that, the system, the apparatus, and the method may be achieved by other means. For example, the apparatus embodiment may be exemplary only. For example, the units may be defined based on logic functions. Practically, units may be defined by other means, such as combining a plurality of units or assemblies or integrating a plurality of units or assemblies into another system, or omitting some features, or not executing some operations. In addition, coupling, or direct coupling, or communicative connection between two objects may be achieved via some interfaces. Indirect coupling or communicative connection between apparatuses or units may be electrical, mechanical, or in other forms.

The unit illustrated as a separated component may be or may not be physically separated. A component shown as a unit may be or may not be a physical unit, that is, the component may be arranged at a position or may be distributed into various network units. According to actual needs, a part of or all of the network units may be selected to achieve the objective of the embodiments of the present disclosure.

Further, various functional units of various embodiments of the present disclosure may be integrated into one processing unit. Alternatively, the various functional units may be arranged independently. Alternatively, two or more of the various functional units may be integrated into one unit.

When the function is achieved in a form of software and sold or used as an independent product, it may be stored in a computer-readable storage medium. Accordingly, the essence of the technical solution of the present disclosure, or a portion of the technical solution of the present disclosure contributing to the related art, or a part of the technical solution may be achieved in the form of software. The computer software product may be stored in a storage medium and include a plurality of instructions to enable a computing device (such as a personal computer, a server, or a network device and so on) to execute all of or some of the operations of the method described in the embodiments of the present disclosure. The above-mentioned storage medium may include: a universal serial bus disc, a mobile hard disc drive, a ROM, a RAM, a magnetic disc, an optical disc, and various media able to store program codes.

The scope of the present disclosure is subject to the scope of the claims.

## Claims

1. A method for reporting a capability, comprising:
reporting (310) an identifier of each of at least one capability group, which capabilities supported by a terminal device belong to, to a network device by the terminal device,
acquiring, by the terminal device, capability grouping information, wherein the capability grouping information comprises a plurality of capability groups and capabilities comprised in each of the capability groups;
wherein the method is **characterized in that**
the capability grouping information is configured by the network device

2. The method according to claim 1, wherein the acquiring capability grouping information by the terminal device, comprises:
receiving the capability grouping information sent from the network device by the terminal device.

3. The method according to claim 2, wherein the receiving the capability grouping information sent from the network device by the terminal device, comprises:
receiving a Non-Access Stratum, NAS, signaling or an Access Stratum, AS, signaling sent from the network device by the terminal device, wherein the NAS signaling or the AS signaling carries the capability grouping information.

4. The method according to any one of claims 1-3, further comprising:
reporting (330) information in regard to an additional capability and additional indication information to the network device by the terminal device, wherein the additional indication information is configured to indicate the additional capability which should be added into or subtracted from capabilities of the at least one capability group by the terminal device, and the additional capability comprises at least one capability.

5. The method according to any one of claims 1-4, further comprising:
receiving (210) a UE-Capability-Request message sent from the network device by the terminal device, wherein the UE-Capability-Request message is configured to indicate the terminal device to report the identifier of each of the at least one capability group.

6. The method according to any one of claims 1-5, wherein the at least one capability group comprises at least one of following capabilities:
a carrier aggregation capability of two component carriers, 2CC CA, a carrier aggregation capability of three component carriers, 3CC CA, a carrier aggregation capability of four component carriers, 4CC CA, a frequency range FR 1, a frequency range FR 2, an evolved Multimedia Broadcast Multicast Service, eMBMS, capability, a communication capability of Vehicle to Everything, V2X, and a beam transmission capability.

7. A method for reporting a capability, comprising:
receiving (320) an identifier of each of at least one capability group reported from a terminal device by a network device, wherein the at least one capability group is which capabilities supported by the terminal device belong to,
wherein the method is **characterized by** further comprising:
sending, by the network device, capability grouping information to the terminal device, wherein the capability grouping information comprises a plurality of capability groups and capabilities comprised in each of the capability groups;
wherein the capability grouping information is configured by the network device.

8. The method according to claim 7, further comprising:
determining the capabilities supported by the terminal device based on the identifier of each of the at least one capability group by the network device.

9. The method according to claim 8, wherein the sending capability grouping information to the terminal device by the network device, comprises:
sending a Non-Access Stratum, NAS, signaling or an Access Stratum, AS, signaling to the terminal device by the network device, wherein the NAS signaling or the AS signaling carries the capability grouping information.

10. The method according to any one of claims 7-9, further comprising:
receiving (330) information in regard to an additional capability and additional indication information sent from the terminal device by the network device, wherein the additional indication information is configured to indicate the additional capability which should be added into or subtracted from capabilities of the at least one capability group by the terminal device, and the additional capability comprises at least one capability.

11. The method according to any one of claims 7-10, wherein the at least one capability group comprises at least one of following capabilities:
a carrier aggregation capability of two component carriers, 2CC CA, a carrier aggregation capability of three component carriers, 3CC CA, a carrier aggregation capability of four component carriers, 4CC CA, a frequency range FR 1, a frequency range FR 2, an evolved Multimedia Broadcast Multicast Service, eMBMS, capability, a communication capability of Vehicle to Everything, V2X, and a beam transmission capability.

12. A terminal device, comprising: a transceiver unit (510) and an acquisition unit (520), wherein the transceiver unit (510) and the acquisition unit (520) are configured to perform the method according to any one of claims 1-6; wherein the terminal device is adapted to receive the capability grouping information sent by the network device.

13. A network device, comprising: a transceiver unit (610) and a processing unit (620), wherein the transceiver unit (610) and the processing unit (620) are configured to perform the method according to any one of claims 7-11.

## Patentansprüche

1. Verfahren zum Melden einer Kapazität, das Folgendes umfasst:
Melden (310) einer Kennung jeder von zumindest einer Kapazitätsgruppe, zu der Kapazitäten gehören, die durch eine Endgerätevorrichtung unterstützt werden, an eine Netzwerkvorrichtung durch die Endgerätevorrichtung, Erfassen, durch die Endgerätevorrichtung, von Kapazitätsgruppierungsinformationen, wobei die Kapazitätsgruppierungsinformationen mehrere Kapazitätsgruppen und Kapazitäten, die in jeder der Kapazitätsgruppen enthalten sind, umfassen;
wobei das Verfahren **dadurch gekennzeichnet ist, dass** die Kapazitätsgruppierungsinformationen durch die Netzwerkvorrichtung konfiguriert werden.

2. Verfahren nach Anspruch 1, wobei das Erfassen von Kapazitätsgruppierungsinformationen durch die Endgerätevorrichtung Folgendes umfasst:
Empfangen der von der Netzwerkvorrichtung gesendeten Kapazitätsgruppierungsinformationen durch die Endgerätevorrichtung.

3. Verfahren nach Anspruch 2, wobei das Empfangen der von der Netzwerkvorrichtung gesendeten Kapazitätsgruppierungsinformationen durch die Endgerätevorrichtung Folgendes umfasst:
Empfangen einer von der Netzwerkvorrichtung gesendeten Nicht-Zugriffsschicht- bzw. NAS-Signalisierung oder Zugriffsschicht- bzw. AS-Signalisierung durch die Endgerätevorrichtung, wobei die NAS-Signalisierung oder die AS-Signalisierung die Kapazitätsgruppierungsinformationen trägt.

4. Verfahren nach einem der Ansprüche 1-3, das ferner Folgendes umfasst:
Melden (330) von Informationen hinsichtlich einer zusätzlichen Kapazität und zusätzlichen Anzeigeinformationen an die Netzwerkvorrichtung durch die Endgerätevorrichtung, wobei die zusätzlichen Anzeigeinformationen konfiguriert sind, um die zusätzliche Kapazität anzuzeigen, die durch die Endgerätevorrichtung zu Kapazitäten der zumindest einen Kapazitätsgruppe hinzugefügt oder von dieser abgezogen werden sollte, und wobei die zusätzliche Kapazität mindestens eine Kapazität umfasst.

5. Verfahren nach einem der Ansprüche 1-4, das ferner Folgendes umfasst:
Empfangen (210) einer von der Netzwerkvorrichtung gesendeten UE-Kapazitäts-Anforderungsnachricht durch die Endgerätevorrichtung, wobei die UE-Kapazitäts-Anforderungsnachricht konfiguriert ist, um der Endgerätevorrichtung anzuzeigen, die Kennung jeder der zumindest einen Kapazitätsgruppe zu melden.

6. Verfahren nach einem der Ansprüche 1 bis 5, wobei die zumindest eine Kapazitätsgruppe zumindest eine der folgenden Kapazitäten umfasst:
eine Trägeraggregationskapazität von zwei Einzelkanälen, 2CC CA,
eine Trägeraggregationskapazität von drei Einzelkanälen, 3CC CA,
eine Trägeraggregationskapazität von vier Einzelkanälen, 4CC CA,
einen Frequenzbereich FR 1, einen Frequenzbereich FR 2, eine eMBMS-Kapazität (evolved Multimedia Broadcast Multicast Service), eine Fahrzeug-zu-Allem- bzw. V2X-Kommunikationskapazität, und
eine Strahlübertragungskapazität.

7. Verfahren zum Melden einer Kapazität, das Folgendes umfasst:
Empfangen (320) einer von einer Endgerätevorrichtung gemeldeten Kennung von jeder von zumindest einer Kapazitätsgruppe durch eine Netzwerkvorrichtung, wobei die zumindest eine Kapazitätsgruppe die ist, zu der die durch die Endgerätevorrichtung unterstützten Kapazitäten gehören,
wobei das Verfahren **dadurch gekennzeichnet ist, dass** es ferner Folgendes umfasst:
Senden, durch die Netzwerkvorrichtung, von Kapazitätsgruppierungsinformationen an die Endgerätevorrichtung, wobei die Kapazitätsgruppierungsinformationen mehrere Kapazitätsgruppen und Kapazitäten, die in jeder der Kapazitätsgruppen enthalten sind, umfassen;
wobei die Kapazitätsgruppierungsinformationen durch die Netzwerkvorrichtung konfiguriert werden.

8. Verfahren nach Anspruch 7, das ferner Folgendes umfasst:
Bestimmen der durch die Endgerätevorrichtung unterstützten Kapazitäten basierend auf der Kennung von jeder der zumindest einen Kapazitätsgruppen durch die Netzwerkvorrichtung.

9. Verfahren nach Anspruch 8, wobei das Senden von Kapazitätsgruppierungsinformationen durch die Netzwerkvorrichtung an die Endgerätevorrichtung Folgendes umfasst:
Senden einer Nicht-Zugriffsschicht- bzw. NAS-Signalisierung oder einer Zugriffsschicht- bzw. AS-Signalisierung durch die Netzwerkvorrichtung an die Endgerätevorrichtung, wobei die NAS-Signalisierung oder die AS-Signalisierung die Kapazitätsgruppierungsinformationen trägt.

10. Verfahren nach einem der Ansprüche 7-9, das ferner Folgendes umfasst:
Empfangen (330) der von der Endgerätevorrichtung gesendeten Informationen hinsichtlich einer zusätzlichen Kapazität und zusätzlichen Anzeigeinformationen durch die Netzwerkvorrichtung, wobei die zusätzlichen Anzeigeinformationen konfiguriert sind, um die zusätzliche Kapazität anzuzeigen, die durch die Endgerätevorrichtung zu Kapazitäten der zumindest einen Kapazitätsgruppe hinzugefügt oder von dieser abgezogen werden sollte, und wobei die zusätzliche Kapazität mindestens eine Kapazität umfasst.

11. Verfahren nach einem der Ansprüche 7 bis 10, wobei die zumindest eine Kapazitätsgruppe zumindest eine der folgenden Kapazitäten umfasst:
eine Trägeraggregationskapazität von zwei Einzelkanälen, 2CC CA,
eine Trägeraggregationskapazität von drei Einzelkanälen, 3CC CA,
eine Trägeraggregationskapazität von vier Einzelkanälen, 4CC CA,
einen Frequenzbereich FR 1, einen Frequenzbereich FR 2, eine eMBMS-Kapazität (evolved Multimedia Broadcast Multicast Service), eine Fahrzeug-zu-Allem- bzw. V2X-Kommunikationskapazität, und
eine Strahlübertragungskapazität.

12. Endgerätevorrichtung, die Folgendes umfasst: eine Sendeempfängereinheit (510) und eine Erfassungseinheit (520), wobei die Sendeempfängereinheit (510) und die Erfassungseinheit (520) ausgelegt sind zum Durchführen des Verfahrens nach einem der Ansprüche 1-6; wobei die Endgerätevorrichtung angepasst ist zum Empfangen der durch die Netzwerkvorrichtung gesendeten Kapazitätsgruppierungsinformationen.

13. Netzwerkvorrichtung, die Folgendes umfasst: eine Sendeempfängereinheit (610) und eine Verarbeitungseinheit (620), wobei die Sendeempfängereinheit (610) und die Verarbeitungseinheit (620) ausgelegt sind zum Durchführen des Verfahrens nach einem der Ansprüche 7-11.

## Revendications

1. Procédé de rapport de capacité, comprenant :
le rapport (310) d'un identifiant de chacun d'au moins un groupe de capacités, lesdites capacités étant prises en charge par un dispositif terminal auquel elles appartiennent, à un dispositif de réseau par le dispositif terminal,
l'acquisition, par le dispositif terminal, d'informations de regroupement de capacités, dans lequel les informations de regroupement de capacités comprennent une pluralité de groupes de capacités et des capacités comprises dans chacun des groupes de capacités ;
dans lequel le procédé est **caractérisé en ce que** les informations de regroupement de capacités sont configurées par le dispositif de réseau.

2. Procédé selon la revendication 1, dans lequel l'acquisition des informations de regroupement de capacités par le dispositif terminal comprend :
la réception des informations de regroupement de capacités envoyées depuis le dispositif de réseau par le dispositif terminal.

3. Procédé selon la revendication 2, dans lequel la réception des informations de regroupement de capacités envoyées depuis le dispositif de réseau par le dispositif terminal comprend :
la réception d'une signalisation de strate sans accès, NAS ou d'une signalisation de strate avec accès, AS, envoyée depuis le dispositif de réseau par le dispositif terminal, dans lequel la signalisation NAS ou la signalisation AS transporte les informations de regroupement de capacités.

4. Procédé selon l'une quelconque des revendications 1 à 3, comprenant en outre :
le rapport (330) d'informations relatives à une capacité supplémentaire et d'informations d'indication supplémentaires au dispositif de réseau par le dispositif terminal, dans lequel les informations d'indication supplémentaires sont configurées pour indiquer la capacité supplémentaire qui devrait être ajoutée aux ou soustraite des capacités de l'au moins un groupe de capacités par le dispositif terminal, et la capacité supplémentaire comprend au moins une capacité.

5. Procédé selon l'une quelconque des revendications 1 à 4 comprenant en outre :
la réception (210) d'un message de demande de capacité d'UE envoyé depuis le dispositif de réseau par le dispositif terminal, dans lequel le message de demande de capacité d'UE est configuré pour indiquer au dispositif terminal de rapporter l'identifiant de chacun du ou des groupes de capacités.

6. Procédé selon l'une quelconque des revendications 1 à 5, dans lequel l'au moins un groupe de capacités comprend au moins l'une des capacités suivantes :
une capacité d'agrégation de porteuses de deux composantes porteuses, 2CC CA, une capacité d'agrégation de porteuses de trois composantes porteuses, 3CC CA, une capacité d'agrégation de porteuses de quatre composantes porteuses, 4CC CA, une plage de fréquences FR1, une plage de fréquences FR2, une capacité de service de multidiffusion multimédia évolué, eMBMS, une capacité de communication de véhicule à tout, V2X, et une capacité de transmission de faisceau.

7. Procédé de rapport de capacité, comprenant :
la réception (320) d'un identifiant de chacun d'au moins un groupe de capacités rapporté depuis un dispositif terminal par un dispositif de réseau, dans lequel l'au moins un groupe de capacités est constitué des capacités prises en charge par le dispositif terminal auquel elles appartiennent,
dans lequel le procédé est **caractérisé en ce qu'**il comprend en outre :
l'envoi, par le dispositif de réseau, d'informations de regroupement de capacités au dispositif terminal, dans lequel les informations de regroupement de capacités comprennent une pluralité de groupes de capacités et des capacités comprises dans chacun des groupes de capacité ; dans lequel les informations de regroupement de capacités sont configurées par le dispositif de réseau.

8. Procédé selon la revendication 7, comprenant en outre :
la détermination des capacités prises en charge par le dispositif terminal sur la base de l'identifiant de chacun du ou des groupes de capacités par le dispositif de réseau.

9. Procédé selon la revendication 8, dans lequel l'envoi des informations de regroupement de capacités au dispositif terminal par le dispositif de réseau comprend :
l'envoi d'une signalisation de strate sans accès, NAS ou d'une signalisation de strate avec accès, AS, au dispositif terminal par le dispositif de réseau, dans lequel la signalisation NAS ou la signalisation AS transporte les informations de regroupement de capacités.

10. Procédé selon l'une quelconque des revendications 7 à 9, comprenant en outre :
la réception (330) d'informations relatives à une capacité supplémentaire et d'informations d'indication supplémentaires envoyées depuis le dispositif terminal par le dispositif de réseau, dans lequel les informations d'indication supplémentaires sont configurées pour indiquer la capacité supplémentaire qui devrait être ajoutée aux ou soustraite des capacités de l'au moins un groupe de capacités par le dispositif terminal, et la capacité supplémentaire comprend au moins une capacité.

11. Procédé selon l'une quelconque des revendications 7 à 10, dans lequel l'au moins un groupe de capacités comprend au moins l'une des capacités suivantes :
une capacité d'agrégation de porteuses de deux composantes porteuses, 2CC CA, une capacité d'agrégation de porteuses de trois composantes porteuses, 3CC CA, une capacité d'agrégation de porteuses de quatre composantes porteuses, 4CC CA, une plage de fréquences FR1, une plage de fréquences FR2, une capacité de service de multidiffusion multimédia évolué, eMBMS, une capacité de communication de véhicule à tout, V2X, et une capacité de transmission de faisceau.

12. Dispositif terminal, comprenant : une unité d'émission-réception (510) et une unité d'acquisition (520), dans lequel l'unité d'émission-réception (510) et l'unité d'acquisition (520) sont configurées pour exécuter le procédé selon l'une quelconque des revendications 1 à 6 ; dans lequel le dispositif terminal est conçu pour recevoir les informations de regroupement de capacités envoyées par le dispositif de réseau.

13. Dispositif de réseau, comprenant : une unité d'émission-réception (610) et une unité d'acquisition (620), dans lequel l'unité d'émission-réception (610) et l'unité d'acquisition (620) sont configurées pour exécuter le procédé selon l'une quelconque des revendications 7 à 11.
